# EUROPEAN PATENT APPLICATION

(11) **EP 4 718 591 A1**
(43) Date of publication of application: **01.04.2026**
(21) Application number: 25197873.0
(22) Date of filing: 25.08.2025
(51) Int. Cl.: H01M 50/103, H01M 50/176, H01M 50/533, H01M 50/55, H01M 50/553, H01M 50/566

(54) **ELECTRICAL ENERGY STORAGE DEVICE AND MANUFACTURING METHOD FOR THE SAME**

(30) Priority: 26.09.2024 JP 2024166847
(71) Applicant: Prime Planet Energy & Solutions, Inc., Chuo-ku, Tokyo 103-0022 (JP)
(72) Inventor: ITOH, Yusuke, Tokyo, 103-0022 (JP)
(74) Representative: Kuhnen & Wacker Patent- und Rechtsanwaltsbüro PartG mbB

(57) **Abstract**

The present disclosure provides a manufacturing method for an electrical energy storage device (100) including an electrode body (20), a case (10), and a first electrode terminal (30) attached to a bottom wall (12a) of the case (10). This manufacturing method includes a step of electrically connecting a first current collecting member (50) to the electrode body (20), a step of inserting the electrode body (20) into the case main body (12) and disposing at least a part (52) of the first current collecting member (50) into a first concave part (30r) of the first electrode terminal (30), and a step of delivering an energy beam (LB) from a side of the first electrode terminal (30), thereby joining by welding the part of the first current collecting member (50) that is disposed inside the first concave part (30r) to the first electrode terminal (30).

## Description

### BACKGROUND OF THE DISCLOSURE

### 1. Field

The present disclosure relates to an electrical energy storage device and a manufacturing method for the same.

### 2. Background

The specification of Chinese Utility Model No. 219017869 discloses an electrical energy storage device including an electrode body that includes a first electrode and a second electrode, a case that accommodates the electrode body, and a first electrode terminal that is electrically connected to the first electrode and is attached to a bottom wall of the case. According to the specification of Chinese Utility Model No. 219017869, an electrode tab (a first current collecting member) provided in the first electrode is joined to the first electrode terminal in the case by welding or the like.

### SUMMARY

If the first electrode terminal is attached to the bottom wall of the case, when the first current collecting member and the first electrode terminal are joined together, it is difficult to bring these members into contact with each other stably in the case, making the joining more difficult, which is a problem. In view of this, it has been demanded to provide an electrical energy storage device with high conduction reliability by joining the first current collecting member and the first electrode terminal stably.

The present disclosure has been made in view of the above circumstances, and a main object thereof is to provide an electrical energy storage device with high conduction reliability.

The present disclosure provides a manufacturing method for an electrical energy storage device including an electrode body that includes a first electrode and a second electrode, a case that accommodates the electrode body, and a first electrode terminal that is electrically connected to the first electrode through a first current collecting member, wherein the case includes a case main body with a bottomed tubular shape that includes a bottom wall, side walls provided at an outer periphery of the bottom wall, and an opening facing the bottom wall, and a sealing plate that seals the opening of the case main body, the first electrode terminal is attached to the bottom wall of the case main body, and includes a first concave part on an inner side of the case main body, and at least a part of the first current collecting member is disposed inside the first concave part and the part disposed in the first concave part is joined by welding to the first electrode terminal, the manufacturing method including: a connecting step of electrically connecting the first current collecting member to the first electrode; an inserting step of inserting the electrode body into the case main body and disposing at least the part of the first current collecting member inside the first concave part of the first electrode terminal after the connecting step; and a welding step of delivering an energy beam from a side of the first electrode terminal after the inserting step, thereby joining by welding the part of the first current collecting member that is disposed inside the first concave part to the first electrode terminal.

With the aforementioned method, the first current collecting member and the first electrode terminal can be joined together stably by welding and the conduction reliability of a joining part can be improved. Accordingly, the electrical energy storage device with high reliability can be achieved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device according to one embodiment;
FIG. 2 is a schematic longitudinal cross-sectional view taken along line II-II in FIG. 1;
FIG. 3 is a schematic view illustrating a structure of an electrode body;
FIG. 4 is a partial enlarged view of a vicinity of a positive electrode terminal in FIG. 2;
FIG. 5A is a plan view schematically illustrating a spacer and FIG. 5B is a cross-sectional view schematically illustrating the spacer;
FIG. 6 is a schematic longitudinal cross-sectional view of an integrally molded product including a case main body;
FIG. 7 is a longitudinal cross-sectional view of a united object;
FIG. 8 is an explanatory view of a welding step;
FIG. 9 is a longitudinal cross-sectional view schematically illustrating an electrode body according to a modification; and
FIG. 10 is a view corresponding to FIG. 2 according to a modification.

### DETAILED DESCRIPTION OF THE PREFERRED EMBODIMENTS

Hereinafter, some preferred embodiments of the art disclosed herein will be described with reference to the drawings. Incidentally, matters other than matters particularly mentioned in the present specification, and necessary for the implementation of the art disclosed herein (for example, the general configuration and manufacturing process of an electrical energy storage device that do not characterize the art disclosed herein) can be grasped as design matters of those skilled in the art based on the conventional art in the relevant field. The art disclosed herein can be implemented on the basis of the disclosure of the present specification and common technical knowledge in the relevant field. Moreover, in the present specification, the notation "A to B" for a range signifies "a value more than or equal to A and less than or equal to B", and is meant to encompass also the meaning of being "more than A" and "less than B".

### [Electrical energy storage device]

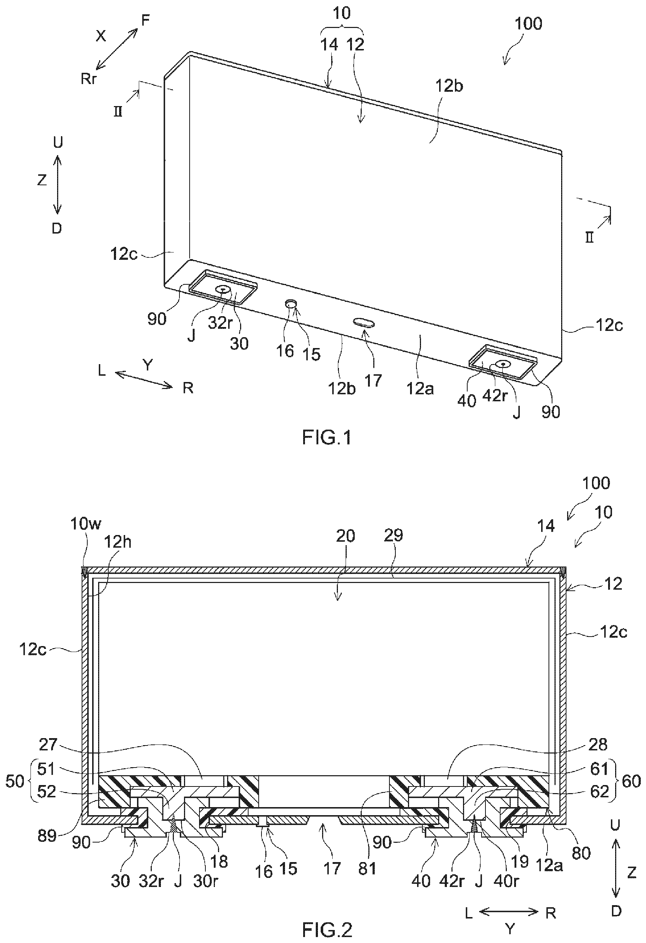

FIG. 1 is a perspective view schematically illustrating an electrical energy storage device 100 according to one embodiment. FIG. 2 is a schematic longitudinal cross-sectional view taken along line II-II in FIG. 1. In the following description, reference signs L, R, F, Rr, U, and D in the drawings respectively denote left, right, front, rear, up, and down. In addition, a reference sign X in the drawings denotes a short side direction (thickness direction) of the electrical energy storage device 100, a reference sign Y denotes a long side direction of the electrical energy storage device 100 that is orthogonal to the short side direction, and a reference sign Z denotes an up-down direction of the electrical energy storage device 100. The up-down direction Z can be a direction that coincides with a vertical direction. These directions are defined however for convenience of explanation, and do not limit the manner in which the electrical energy storage device 100 is disposed.

Note that the term "electrical energy storage device" in this specification refers to general devices that can be repeatedly charged and discharged as a result of the transfer of charge carriers between a positive electrode and a negative electrode through an electrolyte. The electrolyte may be any one of a liquid electrolyte (electrolyte solution), a gel electrolyte, and a solid electrolyte. The electrical energy storage device is a term that encompasses a secondary battery such as a lithium ion secondary battery or a nickel-hydrogen secondary battery, and moreover, a capacitor using a chemical reaction, such as a lithium ion capacitor or a pseudo-capacitor.

As illustrated in FIG. 2, the electrical energy storage device 100 includes a case 10, an electrode body 20, a positive electrode terminal 30, a negative electrode terminal 40, a positive electrode current collecting member 50, and a negative electrode current collecting member 60. The electrical energy storage device 100 further includes a spacer 80 and a liquid electrolyte (electrolyte solution, which is not illustrated) here. However, the spacer 80 is not essential and can be omitted in another embodiment. The electrical energy storage device 100 is a nonaqueous electrolyte secondary battery here. The electrical energy storage device 100 is preferably a secondary battery such as a lithium ion secondary battery.

The case 10 is a housing that accommodates the electrode body 20. Here, as illustrated in FIG. 1, the case 10 has an outer shape having a flat and bottomed rectangular parallelepiped shape (square shape). The material of the case 10 may be the same as a material that has been used conventionally, and is not particularly limited. The case 10 is preferably formed of metal and is more preferably formed of, for example, aluminum, an aluminum alloy, iron, an iron alloy, or the like. As illustrated in FIG. 2, the case 10 includes a case main body 12 and a sealing plate (lid body) 14. The case 10 (the case main body 12 and the sealing plate 14) has the size in accordance with the size of the electrode body 20 and the number of electrode bodies 20 to be accommodated (one, or more than one), for example.

The case main body 12 has a bottomed tubular shape including a bottom wall, side walls provided at an outer periphery of the bottom wall, and an opening facing the bottom wall. The case main body 12 is a bottomed square container having an opening 12h at an upper surface thereof here. Specifically, as illustrated in FIG. 1, the case main body 12 has a bottomed square tubular shape including a bottom wall 12a (a first wall) with a substantially rectangular shape including long sides and short sides, a pair of long side walls 12b (a second wall and a third wall) extending from the long sides of the bottom wall 12a and facing each other, a pair of short side walls 12c (a fourth wall and a fifth wall) extending from the short sides of the bottom wall 12a and facing each other, and the opening 12h facing the bottom wall 12a (see FIG. 2). The case main body 12 preferably has a bottomed square tubular shape. The opening 12h has a substantially rectangular shape here. The bottom wall 12a forms a lower surface of the case 10.

Note that in the present specification, the term "substantially rectangular shape" encompasses, in addition to a perfect rectangular shape (rectangle), for example, an R-like shape whose corner part connecting a long side and a short side of the rectangular shape is rounded, a shape whose corner part includes a notch, and the like.

The long side wall 12b is larger in area than the short side wall 12c. In this embodiment, each of the long side walls 12b and the short side walls 12c is formed continuously from the outer periphery of the bottom wall 12a. In other words, a border part between the bottom wall 12a and the long side wall 12b is not a welded part (not joined by welding) but is a bent part. Similarly, a border part between the bottom wall 12a and the short side wall 12c is not a welded part (not joined by welding) but is a bent part. The case main body 12 with such a shape can be formed by, for example, deep drawing of one metal plate. The long side wall 12b and the short side wall 12c are examples of "the side walls".

The sealing plate 14 is attached to the case main body 12 so as to seal the opening 12h of the case main body 12. The sealing plate 14 is typically a plate-shaped member. The sealing plate 14 faces the bottom wall 12a of the case main body 12. The sealing plate 14 has a substantially rectangular shape here. The sealing plate 14 forms an upper surface of the case 10. The case 10 is integrated in such a way that the sealing plate 14 is joined (for example, joined by welding) to a periphery of the opening 12h of the case main body 12. As illustrated in FIG. 2, a joining part (for example, welding joining part) 10w is formed in an engagement part between the case main body 12 and the sealing plate 14. Thus, the case 10 is hermetically sealed (closed).

As illustrated in FIG. 1 and FIG. 2, an electrolyte solution injection hole 15, a gas discharge valve 17, and terminal extraction holes 18 and 19 are provided at the bottom wall 12a of the case main body 12. The electrolyte solution injection hole 15 is a penetration hole for injecting the electrolyte solution inside the case 10 after the sealing plate 14 is assembled to the case main body 12. The electrolyte solution injection hole 15 is sealed by a sealing member 16 after the injection of the electrolyte solution. Note that the electrolyte solution injection hole 15 may be provided at the sealing plate 14. The gas discharge valve 17 is a thin part that is configured to break when the pressure in the case 10 becomes more than or equal to a predetermined value so as to discharge the gas out of the case 10. Note that the gas discharge valve 17 may be provided at the sealing plate 14. The terminal extraction holes 18 and 19 are formed on both end parts of the bottom wall 12a in the long side direction Y. The terminal extraction holes 18 and 19 penetrate the bottom wall 12a. To the terminal extraction holes 18 and 19 of the bottom wall 12a, the positive electrode terminal 30 and the negative electrode terminal 40 are inserted, respectively, which will be described in detail below.

The electrode body 20 is accommodated inside the case 10. The number of electrode bodies 20 to be accommodated inside one case 10 is not limited in particular, and may one, or more than one (for example, two or more or three or more). As illustrated in FIG. 2, the electrode body 20 is disposed inside the case 10 while being covered with an electrode body holder 29 made of a resin sheet here. Thus, the direct contact between the electrode body 20 and the case main body 12 is prevented. The material of the electrode body holder 29 may be the same as the conventionally used material without particular limitations. Examples of such a material include polyolefin resins such as polypropylene (PP) and polyethylene (PE), fluorine resins such as perfluoroalkoxy alkane and polytetrafluoroethylene (PTFE), and the like.

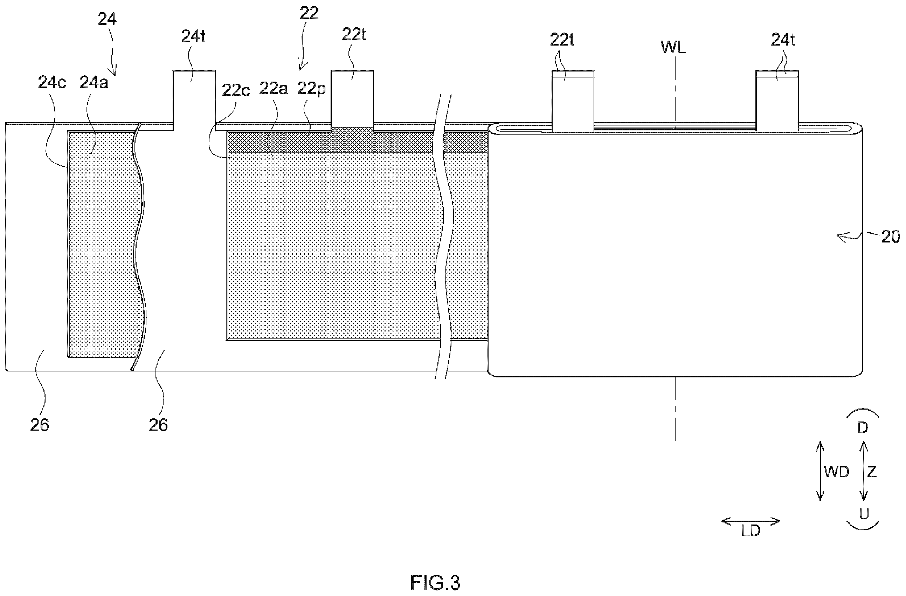

FIG. 3 is a schematic view illustrating a structure of the electrode body 20. A reference sign LD in FIG. 3 denotes a longitudinal direction of the electrode body 20 that is manufactured into the band shape. A reference sign WD denotes a direction that is substantially orthogonal to the longitudinal direction LD and corresponds to a winding axis direction of the electrode body 20.

As illustrated in FIG. 3, the electrode body 20 includes a positive electrode 22 and a negative electrode 24. In this embodiment, the electrode body 20 is a wound electrode body in which the positive electrode 22 with a band shape and the negative electrode 24 with a band shape are stacked through two separators 26 with a band shape in an insulated state and wound in the longitudinal direction LD using a winding axis WL as a center. However, the electrode body 20 may be a multilayer electrode body, which will also be described below in a modification (2). The electrode body 20 has a flat outer shape here. The electrode body 20 is accommodated inside the case 10 so that the winding axis WL substantially coincides with the up-down direction Z here. One of the positive electrode 22 and the negative electrode 24 is one example of "a first electrode" while the other is one example of "a second electrode".

As illustrated in FIG. 3, the positive electrode 22 includes a positive electrode current collector 22c with a band shape and a positive electrode active material layer 22a fixed on at least one surface (preferably both surfaces) of the positive electrode current collector 22c. The positive electrode 22 further includes a positive electrode protection layer 22p here. However, the positive electrode protection layer 22p is not essential and can be omitted in another embodiment. For each member of the positive electrode 22, the conventionally known materials that can be used for general electrical energy storage devices (for example, lithium ion secondary batteries) can be used without particular limitations. The positive electrode current collector 22c is preferably formed of a conductive metal such as aluminum, an aluminum alloy, nickel, or stainless steel, and here is a metal foil, specifically an aluminum foil. However, the positive electrode current collector 22c may include an insulating core body (for example, resin layer), which will also be described below in a modification (1-1).

As illustrated in FIG. 3, the positive electrode 22 includes a plurality of positive electrode tabs 22t at one end side in the winding axis direction WD. The positive electrode tabs 22t are provided with a predetermined space (intermittently) along the longitudinal direction LD. The number of positive electrode tabs 22t attached to one electrode body 20 may be several tens or more, for example, about 40 to 60. Each of the plurality of positive electrode tabs 22t has a convex shape and projects to the outside (left side in FIG. 3). The plurality of positive electrode tabs 22t have the same shape here, and each has a substantially rectangular shape. The plurality of positive electrode tabs 22t may be, however, different from each other in size or shape. The positive electrode tabs 22t are integrally provided at the positive electrode 22 here. The positive electrode tab 22t is a region where the positive electrode active material layer 22a is not formed in the positive electrode current collector 22c. The positive electrode current collector 22c is exposed in at least a part of the positive electrode tab 22t. However, the positive electrode tabs 22t and the positive electrode 22 may be different members, which will also be described in a modification (1-2) below.

The plurality of positive electrode tabs 22t are stacked at one end part of the electrode body 20 in the winding axis direction WD and form a positive electrode tab group 27 (see FIG. 2). As illustrated in FIG. 2, a tip end part of the positive electrode tab group 27 (lower end part in FIG. 2) is connected (specifically, joined) to the positive electrode current collecting member 50. The positive electrode 22 is electrically connected to the positive electrode terminal 30 through the positive electrode tab group 27 (the plurality of positive electrode tabs 22t) and the positive electrode current collecting member 50. The positive electrode 22 is preferably connected electrically to the positive electrode current collecting member 50 through the positive electrode tab group 27.

As illustrated in FIG. 3, the positive electrode active material layer 22a is provided in a band shape along the longitudinal direction LD of the positive electrode current collector 22c. The positive electrode active material layer 22a contains a positive electrode active material capable of reversibly storing and releasing the charge carriers (for example, a lithium transition metal complex oxide such as a lithium nickel cobalt manganese complex oxide). The positive electrode active material layer 22a may contain an optional component other than the positive electrode active material, for example, a conductive material, a binder, various additive components, or the like.

As illustrated in FIG. 3, the positive electrode protection layer 22p is provided in a band shape along the longitudinal direction LD of the positive electrode current collector 22c. The positive electrode protection layer 22p is provided at a border part between the positive electrode current collector 22c and the positive electrode active material layer 22a in the winding axis direction WD. The positive electrode protection layer 22p contains inorganic filler with an insulation property (for example, ceramic particles of alumina or the like). The positive electrode protection layer 22p may contain an optional component other than the inorganic filler, such as a binder, a conductive material, or various additive components. The provision of the positive electrode protection layer 22p can prevent the internal short-circuiting of the electrical energy storage device 100 due to the direct contact between the positive electrode 22 and a negative electrode active material layer 24a at the damage of the separator 26.

As illustrated in FIG. 3, the negative electrode 24 includes a negative electrode current collector 24c with a band shape and the negative electrode active material layer 24a fixed on at least one surface (preferably both surfaces) of the negative electrode current collector 24c. For each member of the negative electrode 24, the conventionally known materials that can be used for general electrical energy storage devices (for example, lithium ion secondary batteries) can be used without particular limitations. The negative electrode current collector 24c is preferably formed of a conductive metal such as copper, a copper alloy, nickel, or stainless steel, and here is a metal foil, specifically a copper foil. However, the negative electrode current collector 24c may include an insulating core body (for example, resin layer), which will also be described below in the modification (1-1).

As illustrated in FIG. 3, the negative electrode 24 includes a plurality of negative electrode tabs 24t at one end side in the winding axis direction WD. In the winding axis direction WD, the negative electrode tabs 24t are provided at an end part on the same side as the positive electrode tabs 22t (on the left side in FIG. 3). The plurality of negative electrode tabs 24t are provided with a predetermined space (intermittently) along the longitudinal direction LD. The number of negative electrode tabs 24t attached to one electrode body 20 is substantially equal to the number of positive electrode tabs 22t and can be several tens or more. Each of the plurality of negative electrode tabs 24t has a convex shape and projects to the outside (left side in FIG. 3). The plurality of negative electrode tabs 24t have the same shape here, and each has a substantially rectangular shape. The plurality of negative electrode tabs 24t may be, however, different from each other in size or shape. The negative electrode tabs 24t are integrally provided at the negative electrode 24 here. The negative electrode tab 24t is a region where the negative electrode active material layer 24a is not formed in the negative electrode current collector 24c. The negative electrode current collector 24c is exposed in at least a part of the negative electrode tab 24t. However, the negative electrode tabs 24t and the negative electrode 24 may be different members, which will also be described in the modification (1-2) below.

The plurality of negative electrode tabs 24t are stacked at one end part of the electrode body 20 in the winding axis direction WD and form a negative electrode tab group 28 (see FIG. 2). As illustrated in FIG. 2, a tip end part of the negative electrode tab group 28 (lower end part in FIG. 2) is connected (specifically, joined) to the negative electrode current collecting member 60. The negative electrode 24 is electrically connected to the negative electrode terminal 40 through the negative electrode tab group 28 (the plurality of negative electrode tabs 24t) and the negative electrode current collecting member 60. The negative electrode 24 is preferably connected electrically to the negative electrode current collecting member 60 through the negative electrode tab group 28. The electrode body 20 preferably includes the positive electrode tab group 27 and the negative electrode tab group 28 at an end part on one side.

As illustrated in FIG. 3, the negative electrode active material layer 24a is provided in a band shape along the longitudinal direction LD of the negative electrode current collector 24c. The negative electrode active material layer 24a contains a negative electrode active material capable of reversibly storing and releasing the charge carriers (for example, a carbon material such as graphite, or a silicon material). The negative electrode active material layer 24a may contain an optional component other than the negative electrode active material, for example, a binder, a dispersant, various additive components, or the like.

As illustrated in FIG. 3, the separator 26 is a member that insulates the positive electrode active material layer 22a of the positive electrode 22 and the negative electrode active material layer 24a of the negative electrode 24 from each other. The separator 26 is preferably, for example, a porous sheet made of resin including polyolefin resin such as polyethylene (PE) or polypropylene (PP). The separator 26 may include a base material part formed by a porous sheet made of resin, and a functional layer (for example, a heat resistance layer (HRL) or an adhesive layer) formed on at least one surface of the base material part. The heat resistance layer is a layer including inorganic filler and a binder, typically. As the inorganic filler, for example, alumina, boehmite, aluminum hydroxide, titania, or the like can be used. The separator 26 forms an outer surface (outermost peripheral part) of the electrode body 20 here.

The liquid electrolyte (electrolyte solution) may be any electrolyte solution used in general electrical energy storage devices (for example, lithium ion secondary batteries), without particular limitations. One example thereof is a nonaqueous electrolyte solution in which a supporting salt is dissolved in a nonaqueous solvent. Examples of the nonaqueous solvent include carbonate solvents such as ethylene carbonate, dimethyl carbonate, and ethyl methyl carbonate. One example of the supporting salt is lithium salt such as LiPF₆ and sodium salt such as NaPF₆. The electrolyte solution may contain an additive as necessary. However, the electrolyte may be in a solid form (solid electrolyte) to be integrated with the electrode body 20 in another embodiment.

As illustrated in FIG. 1 and FIG. 2, the positive electrode terminal 30 and the negative electrode terminal 40 are attached to the bottom wall 12a of the case main body 12 with the bottomed tubular shape. The positive electrode terminal 30 is attached to one end part of the bottom wall 12a in the long side direction Y (left end part in FIG. 1 and FIG. 2). The negative electrode terminal 40 is attached to the other end part of the bottom wall 12a in the long side direction Y (right end part in FIG. 1 and FIG. 2). The positive electrode terminal 30 is inserted into the terminal extraction hole 18 of the bottom wall 12a and has a part thereof exposed out of the case 10. The negative electrode terminal 40 is inserted into the terminal extraction hole 19 of the bottom wall 12a and has a part thereof exposed out of the case 10. In the case where the positive electrode 22 is "the first electrode", the positive electrode terminal 30 is one example of "a first electrode terminal". In the case where the negative electrode 24 is "the first electrode", the negative electrode terminal 40 is one example of "the first electrode terminal".

In the case 10, the terminal (the positive electrode terminal 30 and/or the negative electrode terminal 40) is provided on a surface on the side opposite to the joining part 10w between the case main body 12 and the sealing plate 14. In this manner, the terminal (preferably, the positive electrode terminal 30 and the negative electrode terminal 40) is provided at the bottom wall 12a apart from the joining part 10w. Thus, even in the application of an external force to the terminal during the use of the electrical energy storage device 100, for example, the application of a large burden on the joining part 10w can be suppressed. Therefore, the damage of the joining part 10w is suppressed and the sealability and reliability of the joining part 10w can be improved.

As illustrated in FIG. 1 and FIG. 2, the terminal (the positive electrode terminal 30 and/or the negative electrode terminal 40) is insulated from the bottom wall 12a of the case main body 12 by the insulating member (here, a gasket 90). The terminal is fixed to the bottom wall 12a of the case main body 12 through the gasket 90. The gasket 90 is preferably made of resin. The terminal may be attached to the bottom wall 12a together with the gasket 90 by a method of insert molding (integral molding). Thus, the adhesion among the terminal, the gasket 90, and the bottom wall 12a is increased and the sealability and the reliability can be improved. In another embodiment, however, the terminal may be fixed to the bottom wall 12a together with the gasket 90, for example, by a caulking process or the like. For example, the terminal can be fixed to the case main body 12 by connecting the terminal to an external conductive member disposed on the outside of the case main body 12 by the caulking process and/or welding joining. Alternatively, the terminal can be fixed to the case main body 12 by connecting the terminal to an internal conductive member disposed on the inside of the case main body 12 by the caulking process and/or welding joining. Further alternatively, the terminal may be fixed to the bottom wall 12a through an adhesive layer (adhesive or the like).

In an example to be described below in detail, the positive electrode 22 is "the first electrode" but the negative electrode 24 side can also have the similar structure. In that case, "the positive electrode" below can be replaced by "the negative electrode" as appropriate. The art disclosed herein is more preferably applied to each of the positive electrode 22 side and the negative electrode 24 side.

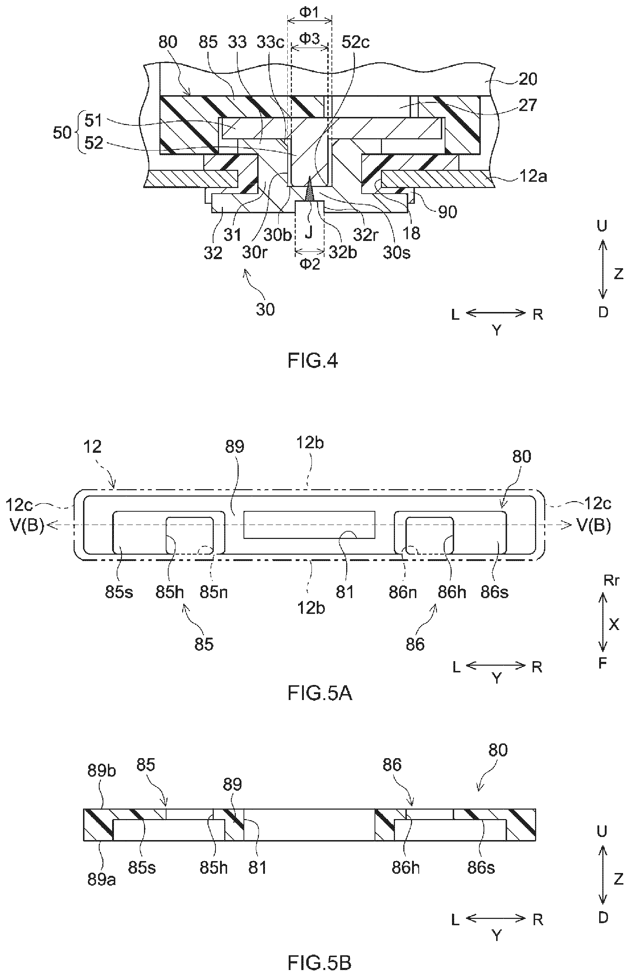

FIG. 4 is a partial enlarged view of a vicinity of the positive electrode terminal 30. The positive electrode terminal 30 is inserted into the terminal extraction hole 18 of the bottom wall 12a and extends from the inside of the case main body 12 (upper side in FIG. 4) to the outside (lower side in FIG. 4). The positive electrode terminal 30 partially projects from the terminal extraction hole 18 to an outer surface side of the bottom wall 12a and is exposed out of the case 10. The positive electrode terminal 30 is electrically connected to the positive electrode 22 of the electrode body 20 through the positive electrode current collecting member 50. As illustrated in FIG. 4, the positive electrode terminal 30 is electrically connected to the positive electrode tab group 27 of the positive electrode 22 here. The positive electrode terminal 30 is preferably formed of metal, and is more preferably formed of aluminum or an aluminum alloy, for example. The positive electrode terminal 30 includes a first concave part 30r. The positive electrode terminal 30 further includes a tubular part 31, an outer flange part 32, an inner flange part 33, a second concave part 32r, and a sectioning wall 30s here.

The tubular part 31 is a part disposed in the terminal extraction hole 18. The tubular part 31 extends in the up-down direction Z. Although not illustrated, the tubular part 31 here has an annular shape in an XY plan view. That is to say, the outer shape of the tubular part 31 is a circular cylindrical shape. The outer flange part 32 is a part that is coupled to a lower end part of the tubular part 31 (an end part on the outer surface side of the bottom wall 12a) and that has a larger outer shape than the tubular part 31. The outer flange part 32 is disposed on the outside of the case main body 12 relative to the terminal extraction hole 18 (on the outer surface side of the bottom wall 12a). The outer flange part 32 has a substantially rectangular shape in the XY plan view here as illustrated in FIG. 1. The inner flange part 33 is a part that is coupled to an upper end part of the tubular part 31 (an end part on the electrode body 20 side) and that has a larger outer shape than the tubular part 31. The inner flange part 33 is disposed on the inside of the case main body 12 relative to the terminal extraction hole 18 (on the electrode body 20 side). Note that the outer shape of each of the outer flange part 32 and the inner flange part 33 can be made larger than the inner diameter of the terminal extraction hole 18. In addition, the shape of each of the outer flange part 32 and the inner flange part 33 in the plan view may be a circular shape.

The first concave part 30r is provided on an inner side of the case main body 12 as illustrated in FIG. 4. The first concave part 30r is provided along the terminal extraction hole 18. The first concave part 30r is provided inside the terminal extraction hole 18. The first concave part 30r is provided on an inner peripheral side of the tubular part 31. The first concave part 30r extends from the tubular part 31 to the outer flange part 32. The first concave part 30r is formed in a circular cylindrical shape here. The first concave part 30r is a hole that does not penetrate, and includes a bottom surface 30b. The bottom surface 30b preferably has a circular shape in the XY plan view. In the XY plan view, a center of the bottom surface 30b coincides with a center of the terminal extraction hole 18 here. At the first concave part 30r, a part of the positive electrode current collecting member 50 (specifically, a second connection part 52) to be described below is disposed.

In this embodiment, the inner flange part 33 includes a chamfered part 33c at a corner part on the first concave part 30r side (a part that can come into contact with the positive electrode current collecting member 50 first). The chamfered part 33c is formed **continuously** along an outer edge of the first concave part 30r. The shape of the chamfered part 33c is not limited in particular; however, for example, the shape may be a chamfered shape with a corner part cut off at a predetermined angle (for example, 45 degrees), a rounded shape with a corner part rounded, or the like. Providing the chamfered part 33c in the inner flange part 33 makes it easier to insert the positive electrode current collecting member 50 into the first concave part 30r of the positive electrode terminal 30 in (step 4) the inserting step in a manufacturing method to be described below; thus, the insertion property can be increased.

As illustrated in FIG. 4, the second concave part 32r is provided on an outer surface of the positive electrode terminal 30. The second concave part 32r is provided in the outer flange part 32. The second concave part 32r is provided in an outer part of the case main body 12. The second concave part 32r is formed in a circular cylindrical shape here. Although there is no particular limitation, a length (here, a diameter) Φ2 of the second concave part 32r in the long side direction Y is preferably smaller than or equal to a length (here, a diameter) Φ1 of the first concave part 30r in the long side direction Y (Φ2 ≤ Φ1).

The second concave part 32r is provided at a position facing the first concave part 30r. The second concave part 32r is provided at a position overlapping with the first concave part 30r in the XY plan view. The second concave part 32r includes a bottom surface 32b. The bottom surface 32b preferably has a circular shape in the XY plan view. In the XY plan view, a center of the bottom surface 32b coincides with the center of the terminal extraction hole 18 here. The center of the bottom surface 32b coincides with the center of the bottom surface 30b of the first concave part 30r here. At the bottom surface 32b, a welding joining part J with the positive electrode current collecting member 50 is formed.

As illustrated in FIG. 4, the sectioning wall 30s sections the first concave part 30r and the second concave part 32r in the up-down direction Z. The sectioning wall 30s is provided in the outer flange part 32 (on the outer side of the case main body 12 relative to the terminal extraction hole 18) here. The sectioning wall 30s extends along an inner surface of the bottom wall 12a. At the sectioning wall 30s, the welding joining part J with the positive electrode current collecting member 50 is formed continuously from the bottom surface 32b.

The positive electrode current collecting member 50 is a conductive member and forms a conductive path between the positive electrode 22 (specifically, the positive electrode tab group 27) and the positive electrode terminal 30. By the provision of the positive electrode current collecting member 50 between the positive electrode tab group 27 and the positive electrode terminal 30, the electric connection can be easily kept more stably. The positive electrode current collecting member 50 is preferably formed of metal with excellent conductivity and is formed of, for example, aluminum or an aluminum alloy. The positive electrode current collecting member 50 may be formed of the metal similar to that of the positive electrode tab 22t and/or the positive electrode terminal 30. As illustrated in FIG. 4, the positive electrode current collecting member 50 has a left-right asymmetric shape in the long side direction Y. The positive electrode current collecting member 50 includes a first connection part 51 and the second connection part 52. In the case where the positive electrode 22 is "the first electrode", the positive electrode current collecting member 50 is one example of "a first current collecting member".

The first connection part 51 is provided at an upper end part of the positive electrode current collecting member 50 (an end part on the electrode body 20 side). The first connection part 51 is attached to the positive electrode tab group 27 (the plurality of positive electrode tabs 22t) and is electrically connected to the positive electrode 22. The first connection part 51 is joined (for example, joined by welding such as ultrasonic welding) to the positive electrode tab group 27 (the plurality of positive electrode tabs 22t). The first connection part 51 has a flat shape here, and extends along an inner surface of the bottom wall 12a. As illustrated in FIG. 4, the width of the first connection part 51 is larger than that of the positive electrode tab group 27 in the long side direction Y.

The second connection part 52 is provided at a lower end part of the positive electrode current collecting member 50 (an end part on the bottom wall 12a side). The second connection part 52 is a projection part (convex part) projecting from the first connection part 51. The second connection part 52 is disposed on the opposite side of the positive electrode tab group 27 with the first connection part 51 therebetween. The second connection part 52 is disposed at a position not overlapping with the positive electrode tab group 27 in the XY plan view. The second connection part 52 is disposed inside the first concave part 30r of the positive electrode terminal 30. The second connection part 52 is inserted to the first concave part 30r of the positive electrode terminal 30. Thus, the electrical connection between the positive electrode terminal 30 and the positive electrode current collecting member 50 can be easily maintained more stably. Accordingly, the conduction reliability can be improved.

The second connection part 52 has a columnar shape, specifically, a circular columnar shape here. The second connection part 52 preferably has a circular shape in the XY plan view. When both the second connection part 52 of the positive electrode current collecting member 50 and the first concave part 30r of the positive electrode terminal 30 have a circular shape in the XY plan view, the second connection part 52 can be easily inserted into the first concave part 30r in (step 4) the inserting step in the manufacturing method to be described below, and the insertion property can be increased.

The second connection part 52 includes a chamfered part 52c at a corner part of a tip end part (a lower end part in FIG. 4). The chamfered part 52c is formed continuously in a peripheral direction. The shape of the chamfered part 52c is not limited in particular; however, for example, the shape may be a chamfered shape with a corner part cut off at a predetermined angle (for example, 45 degrees), a rounded shape with a corner part rounded, or the like. The tip end part of the second connection part 52 is a part that comes into contact with the first concave part 30r of the positive electrode terminal 30 first in (step 4) the inserting step in the manufacturing method to be described below. Having the chamfered part 52c at the tip end part of the second connection part 52 makes it easier to insert the second connection part 52 into the first concave part 30r and the insertion property is increased. The tip end part of the second connection part 52 is in contact with the bottom surface 30b of the first concave part 30r. At the tip end part of the second connection part 52, the welding joining part J with the positive electrode terminal 30 is formed continuously from the sectioning wall 30s.

In the cross-sectional view in FIG. 4, a length (here, a diameter) Φ3 of the second connection part 52 in the long side direction Y is preferably smaller than the diameter Φ1 of the first concave part 30r of the positive electrode terminal 30 (Φ3 < Φ1). A ratio (Φ1/Φ3) of the diameter Φ1 of the first concave part 30r to the diameter Φ3 of the second connection part 52 is preferably a little larger than 1. The difference (Φ1 - Φ3) between the diameter Φ3 of the second connection part 52 and the diameter Φ1 of the first concave part 30r is preferably 0.5 mm or more, more preferably 0.8 mm or more, or still more preferably 1 mm or more. Securing play inside the first concave part 30r makes it easier to insert the second connection part 52 into the first concave part 30r in (step 4) the inserting step in the manufacturing method to be described below, and the insertion property is increased.

The diameter Φ3 of the second connection part 52 is preferably larger than the diameter Φ2 of the second concave part 32r of the positive electrode terminal 30 (Φ2 < Φ3). In this case, when an energy beam is delivered into the second concave part 32r in (step 5) a welding step in the manufacturing method to be described below, the positive electrode terminal 30 and the positive electrode current collecting member 50 can be easily joined together by welding stably.

A part of the positive electrode current collecting member 50 that is disposed inside the first concave part 30r of the positive electrode terminal 30 is joined by welding to the positive electrode terminal 30. In this embodiment, as illustrated in FIG. 4, the sectioning wall 30s of the positive electrode terminal 30 (from the bottom surface 32b of the second concave part 32r to the bottom surface 30b of the first concave part 30r) and the second connection part 52 of the positive electrode current collecting member 50 (the part disposed in the first concave part 30r, the tip end part in particular) are joined together by welding. At a border part between the positive electrode current collecting member 50 and the positive electrode terminal 30, the welding joining part J is formed. The welding joining part J is a part that is fused by irradiation with the energy beam such as laser welding and then solidified.

In this embodiment, the welding joining part J between the positive electrode current collecting member 50 (the first current collecting member) and the positive electrode terminal 30 (the first electrode terminal) extends from the bottom surface 32b of the second concave part 32r of the positive electrode terminal 30 to the bottom surface 30b of the first concave part 30r and further extends to the inside of the positive electrode current collecting member 50. Thus, the positive electrode terminal 30 and the positive electrode current collecting member 50 can be joined together more firmly and the conduction reliability of the welding joining part J can be improved.

As illustrated in FIG. 1 and FIG. 2, the welding joining part J is provided inside the second concave part 32r here. Providing the welding joining part J inside the second concave part 32r makes it difficult for the welding joining part J to project to the outer surface side of the bottom wall 12a. The welding joining part J exists within the second concave part 32r here. Thus, it is possible to suppress that the welding joining part J is damaged or broken because of interference with another member, a jig, or the like. In addition, an external connection member such as a bus bar can be brought into contact with the outer surface of the positive electrode terminal 30 suitably.

The negative electrode terminal 40 is electrically connected to the negative electrode 24 of the electrode body 20 through the negative electrode current collecting member 60. The negative electrode terminal 40 has a structure similar to that of the positive electrode terminal 30 here. As illustrated in FIG. 2, the negative electrode terminal 40 is electrically connected to the negative electrode tab group 28 of the negative electrode 24 here. The negative electrode terminal 40 is preferably formed of metal, and is more preferably formed of copper or a copper alloy, for example. The negative electrode terminal 40 includes a first concave part 40r and a second concave part 42r.

The negative electrode current collecting member 60 is a conductive member and forms a conductive path between the negative electrode 24 (specifically, the negative electrode tab group 28) and the negative electrode terminal 40. The negative electrode current collecting member 60 is preferably formed of metal with excellent conductivity and is formed of, for example, copper or a copper alloy. The negative electrode current collecting member 60 may be formed of the metal similar to that of the negative electrode tab 24t and/or the negative electrode terminal 40. The negative electrode current collecting member 60 has a structure similar to that of the positive electrode current collecting member 50 here. The negative electrode current collecting member 60 includes a first connection part 61 and a second connection part 62 as illustrated in FIG. 2. In the case where the negative electrode 24 is "the first electrode", the negative electrode current collecting member 60 is one example of "the first current collecting member".

The spacer 80 is disposed between the bottom wall 12a (specifically, on an inner side surface, an upper surface in FIG. 2) and the electrode body 20 (specifically, a lower side surface in FIG. 2) inside the case 10 as illustrated in FIG. 2. The spacer 80 includes a part that is disposed between the positive electrode current collecting member 50 and the electrode body 20. The spacer 80 typically has an insulating property, and is preferably made of resin. The material of the spacer 80 may be the same as the materials given as the examples of the electrode body holder 29.

FIG. 5A is a plan view schematically illustrating the spacer 80, and FIG. 5B is a cross-sectional view schematically illustrating the spacer 80. Note that, in FIG. 5A, the side walls of the case main body 12 (the pair of long side walls 12b and the pair of short side walls 12c) are illustrated together with virtual lines. As illustrated in FIG. 5A and FIG. 5B, the spacer 80 includes a base part 89 with a flat plate shape, and a pair of support parts 85 and 86. The spacer 80 further includes a central part penetration hole 81 here.

As illustrated in FIG. 2, the central part penetration hole 81 is provided in a part facing the electrolyte solution injection hole 15 and the gas discharge valve 17 (overlapping part in the XY plan view). Thus, in the up-down direction Z, the electrolyte solution injection hole 15 and the gas discharge valve 17 directly face the electrode body 20 (or the electrode body holder 29).

The support part 85 is a part that supports the conductive path on the positive electrode 22 side in (step 4) the inserting step and (step 5) the welding step in the manufacturing method to be described below. As illustrated in FIG. 5A and FIG. 5B, the support part 85 includes a step part 85s and a penetration hole 85h. As can be seen from FIG. 2, the positive electrode current collecting member 50 is disposed in the step part 85s. Here, the first connection part 51 is engaged with the step part 85s. The step part 85s is in contact with a surface of the positive electrode current collecting member 50 on the electrode body 20 side. The penetration hole 85h is provided inside the step part 85s. As can be seen from FIG. 2, the positive electrode tab group 27 is inserted to the penetration hole 85h. On one side of the penetration hole 85h in the short side direction X, a notch 85n is provided. In (step 3) an assembling step to be described below, the conductive path on the positive electrode 22 side is inserted to the support part 85 through the notch 85n.

The support part 86 is a part that supports the conductive path on the negative electrode 24 side in (step 4) the inserting step and (step 5) the welding step in the manufacturing method to be described below. As illustrated in FIG. 5A and FIG. 5B, the support part 86 includes a step part 86s and a penetration hole 86h. The support part 86 is provided symmetrically with the support part 85. As can be seen from FIG. 2, the negative electrode current collecting member 60 is disposed in the step part 86s. Here, the first connection part 61 is engaged with the step part 86s. The step part 86s is in contact with a surface of the negative electrode current collecting member 60 on the electrode body 20 side. The penetration hole 86h is provided inside the step part 86s. As can be seen from FIG. 2, the negative electrode tab group 28 is inserted to the penetration hole 86h. On one side of the penetration hole 86h in the short side direction X (on a front side in FIG. 5A, on the same side as the notch 85n), a notch 86n is provided. In (step 3) the assembling step to be described below, the conductive path on the negative electrode 24 side is inserted to the support part 86 through the notch 86n.

The spacer 80 is integrated with (specifically, mechanically connected to) the current collecting member (the positive electrode current collecting member 50 and/or the negative electrode current collecting member 60) in such a way that the conductive path on the positive electrode 22 side is disposed in the support part 85 and the conductive path on the negative electrode 24 side is disposed in the support part 86 here. The spacer 80 is assembled to the current collecting member. The spacer 80 is attached to the current collecting member. The spacer 80 is also integrated with (connected to) the electrode body 20 through the current collecting member here.

As illustrated in FIG. 2, the base part 89 extends along the bottom wall 12a of the case main body 12. As illustrated in FIG. 5A, in the XY plan view, an outer periphery of the spacer 80 (specifically, the base part 89) is preferably in contact with or close to the inner surface of the side wall of the case main body 12. The gap between the spacer 80 and the side wall of the case main body 12 (the difference between the inner size of the case main body 12 and the outer size of the spacer 80) is preferably 1 mm or less, more preferably 0.8 mm or less, and still more preferably 0.5 mm or less.

As illustrated in FIG. 5B, the base part 89 includes a first surface 89a facing the bottom wall 12a and a second surface 89b facing the electrode body 20. The first surface 89a is preferably in contact with or close to the bottom wall 12a. In this case, even when the electrical energy storage device 100 is used in the arrangement with the posture in which the bottom wall 12a side is disposed on a lower side in the vertical direction, for example, the spacer 80 does not easily move in the up-down direction Z (to the bottom wall 12a side in particular). Accordingly, the damage of the electrode tab group (the positive electrode tab group 27 and/or the negative electrode tab group 28) or the conductive path can be suppressed effectively, and the conduction reliability can be improved. The second surface 89b faces the electrode body 20 through the electrode body holder 29 here. In this case, a part of the electrode body holder 29 that faces the support part 85 or 86 preferably includes a penetration hole or a notch through which the electrode tab group penetrates. As illustrated in FIG. 2, the second surface 89b is preferably in contact with the electrode body 20 (or the electrode body holder 29).

The base part 89 is in contact with or close to the inner surface of the side wall of the case main body 12 and the spacer 80 includes the support parts 85 and 86; thus, in (step 4) the inserting step in the manufacturing method to be described below, it is easy to guide the electrode body 20 and the current collecting member (the positive electrode current collecting member 50 and/or the negative electrode current collecting member 60) to desired positions. That is to say, the spacer 80 can also function as a guide member for the electrode body 20 or a positioning member for the current collecting member. Additionally, in (step 5) the welding step in the manufacturing method to be descried below, the current collecting member is brought into contact with the terminal (the positive electrode terminal 30 and/or the negative electrode terminal 40) stably to facilitate the joining.

Note that the spacer 80 in this embodiment is one member. However, the spacer 80 may be formed by a plurality of members as will be described in a modification (4-1) below. In addition, the current collecting member (the positive electrode current collecting member 50 and/or the negative electrode current collecting member 60) is disposed in the support part 85 or 86 of the spacer 80 so that both members are integrated with (mechanically connected to) each other in this embodiment; however, these members can be integrated with each other through another mechanism, which will also be described in a modification (4-2) below.

### [Manufacturing method for electrical energy storage device]

The electrical energy storage device 100 according to this embodiment can be manufactured by a method including the following steps: (step 1A) a case preparing step; (step 1B) an electrode body preparing step; (step 2) a connecting step; (step 3) the assembling step; (step 4) the inserting step; (step 5) the welding step; and (step 6) a sealing step, for example. However, the order of (step 1A) the case preparing step and (step 1B) the electrode body preparing step is not limited in particular and may be opposite or may be substantially the same time. In addition, the order of (step 1A) the case preparing step and (step 2) the connecting step is not limited in particular and may be opposite or may be substantially the same time. Furthermore, the order of (step 2) the connecting step and (step 3) the assembling step is not limited in particular and may be opposite or may be substantially the same time. Moreover, (step 3) the assembling step is an optional step and can be omitted. The manufacturing method disclosed herein may further include another step at an optional stage. For example, (step 6) the sealing step may be followed by a step of injecting the electrolyte solution into the case 10.

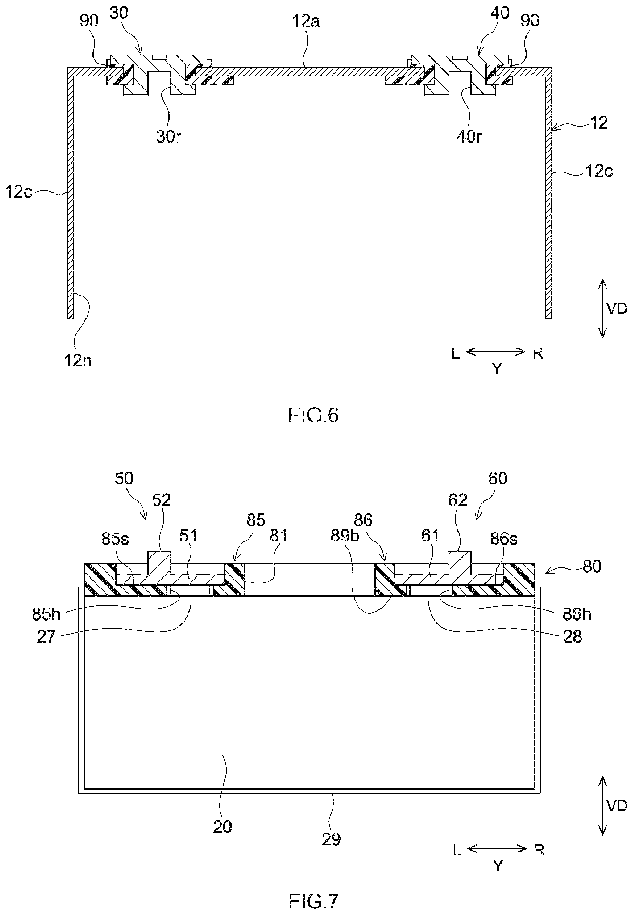

In (step 1A) the case preparing step, the case main body 12 and the sealing plate 14 are prepared before (step 4) the inserting step. Specifically, the case main body 12 with the bottomed tubular shape including the bottom wall 12a, the side walls 12b and 12c, and the opening 12h, and the sealing plate 14 that seals the opening 12h are prepared. The case main body 12 and the sealing plate 14 may be a purchased product supplied from a supplier or the like or can be manufactured by yourself. FIG. 6 is a schematic longitudinal cross-sectional view of an integrally molded product including the case main body 12. Note that FIG. 6 illustrates an inversion posture in which the bottom wall 12a of the case main body 12 faces upward in the vertical direction in consideration of the workability or the like in (step 5) the welding step to be described below.

In the integrally molded product illustrated in FIG. 6, the terminal (the positive electrode terminal 30 and/or the negative electrode terminal 40) is attached to the bottom wall 12a of the case main body 12. The terminal is preferably attached to the bottom wall 12a in a state of being insulated from the bottom wall 12a through an insulating member (here, the gasket 90). The terminal may be attached by any method without particular limitations. Here, the terminal is attached to the bottom wall 12a together with the gasket 90 by the method of insert molding (integral molding). That is to say, the case main body 12 is prepared as an integrally molded product that is integrated with the gasket 90 and the terminal (the positive electrode terminal 30 and/or the negative electrode terminal 40) here. In another embodiment, however, the terminal may be attached to the bottom wall 12a by the caulking process (riveting) or the like, or may be attached to the bottom wall 12a through the adhesive layer (adhesive or the like). The terminal does not need to be attached to the bottom wall 12a first and can be attached to the bottom wall 12a in the inserting step, the welding step, or the like to be described below, for example, which will also be described in a modification (5) below.

In (step 1B) the electrode body preparing step, the electrode body 20 is prepared. The electrode body 20 may be a purchased product supplied from the supplier or the like or can be manufactured by yourself. In one example, first, the positive electrode 22 with a band shape and the negative electrode 24 with a band shape are stacked on each other through the separator 26 with a band shape, and wound in the longitudinal direction LD using the winding axis WL as a center so as to be formed in a tubular shape. At this time, adjustment is conducted so that the plurality of positive electrode tabs 22t and the plurality of negative electrode tabs 24t project from the same end side and are stacked at different positions. Next, the electrode body (tubular body) wound into the tubular shape is subjected to press-molding into a flat shape, for example, so that the electrode body 20 with the flat shape is manufactured. Then, the plurality of positive electrode tabs 22t are bundled, thereby being integrated as the positive electrode tab group 27. Similarly, the plurality of negative electrode tabs 24t are bundled, thereby being integrated as the negative electrode tab group 28.

In (step 2) the connecting step, the first current collecting member (the positive electrode current collecting member 50 or the negative electrode current collecting member 60) is electrically connected to the first electrode (the positive electrode 22 or the negative electrode 24) of the electrode body 20. That is to say, the conductive path between the first electrode and the first current collecting member is formed. In this embodiment, the first connection part 51 of the positive electrode current collecting member 50 is joined to the positive electrode tab group 27 of the positive electrode 22, so that the positive electrode current collecting member 50 is electrically connected to the positive electrode 22. Similarly, the first connection part 61 of the negative electrode current collecting member 60 is joined to the negative electrode tab group 28 of the electrode body 20, so that the negative electrode current collecting member 60 is electrically connected to the negative electrode 24. The joining method may be similar to the conventional method without particular limitations. In some embodiments, for example, it is preferable to employ welding joining by irradiation with an energy beam, such as ultrasonic welding, resistance welding, or laser welding. Thus, the electrode body 20 is integrated with (mechanically connected to) the current collecting member. Then, the electrode body 20 is covered with the electrode body holder 29 (resin sheet or the like).

In (step 3) the assembling step, the spacer 80 is assembled to the first current collecting member (the positive electrode current collecting member 50 or the negative electrode current collecting member 60) after the connecting step and before the inserting step (before the electrode body 20 is inserted to the case main body 12). As described above, the spacer 80 according to this embodiment includes the notches 85n and 86n (see FIG. 5A); therefore, sliding (inserting) the spacer 80 from a side of the first current collecting member makes it possible to assemble the spacer 80 to the first current collecting member here. Thus, the spacer 80 is integrated with the first current collecting member and the united object including the electrode body 20, the first current collecting member, and the spacer 80 is manufactured. FIG. 7 is a schematic longitudinal cross-sectional view of the united object. Note that FIG. 7 illustrates the inversion posture in which the first current collecting member faces upward in the vertical direction, which is similar to FIG. 6.

As described above, the spacer 80 according to this embodiment includes the pair of support parts 85 and 86. Therefore, when the spacer 80 is assembled to the first current collecting member (the positive electrode current collecting member 50 or the negative electrode current collecting member 60), the first connection part 51 of the positive electrode current collecting member 50 is engaged with the support part 85 (specifically, the step part 85s) of the spacer 80 and a surface of the first connection part 51 on the electrode body 20 side is supported by the support part 85 (specifically, the step part 85s) as illustrated in FIG. 7. In addition, the first connection part 61 of the negative electrode current collecting member 60 is engaged with the support part 86 (specifically, the step part 86s) of the spacer 80 and a surface of the first connection part 61 on the electrode body 20 side is supported by the support part 86 (specifically, the step part 86s). Moreover, the positive electrode tab group 27 is inserted to the support part 85 (specifically, the penetration hole 85h) of the spacer 80, and the negative electrode tab group 28 is inserted to the support part 86 (specifically, the penetration hole 86h). Thus, a part of the spacer 80 (here, the step parts 85s and 86s) is disposed between the first current collecting member and the electrode body 20. In addition, the second surface 89b of the spacer 80 is supported by an end surface of the electrode body 20.

Note that, in this embodiment, the first current collecting member is electrically connected to the first electrode of the electrode body 20 first in (step 2) the connecting step and the spacer 80 is attached to the first current collecting member in (step 3) the assembling step; however, the order of these steps is not limited in particular as described above. For example, the spacer 80 may be attached to the first current collecting member first, and then the first current collecting member may be electrically connected to the first electrode of the electrode body 20, which is contrary to this embodiment.

In (step 4) the inserting step, the electrode body 20 is inserted into the case main body 12 and at least a part of the first current collecting members (the positive electrode current collecting member 50 and the negative electrode current collecting member 60) is disposed inside the first concave part (the first concave part 30r or the first concave part 40r) of the first electrode terminal (the positive electrode terminal 30 or the negative electrode terminal 40) after the connecting step. In this embodiment, the united object in FIG. 7 that is integrated in (step 3) the assembling step is inserted into the integrally molded product in FIG. 6 that is prepared in (step 1A) the case preparing step. Specifically, the united object in FIG. 7 is inserted through the opening 12h of the case main body 12 of the integrally molded product in FIG. 6 so that a side of the united object in FIG. 7 where the current collecting member (the positive electrode current collecting member 50 and/or the negative electrode current collecting member 60) is attached faces the bottom wall 12a.

As described above, the united object in FIG. 7 includes the electrode body 20 and the spacer 80 and the spacer 80 is configured so that its outer periphery is in contact with or close to the inner surface of the side walls of the case main body 12 (the pair of long side walls 12b and the pair of short side walls 12c). Therefore, the united object inserted into the case main body 12 through the opening 12h moves toward the bottom wall 12a so that the spacer 80 extends along the side walls 12b and 12c of the case main body 12. The spacer 80 is disposed between the bottom wall 12a and the electrode body 20. Manufacturing the united object as illustrated in FIG. 7 in advance makes it easier to keep the electrode body 20 in a horizontal state, and it is possible to suppress that the electrode body 20 is accommodated in the tilted state in the case main body 12 or gets caught by the side wall in the middle of moving, for example. That is to say, the spacer 80 according to this embodiment can function as the guide member that guides the electrode body 20 to a desired arrangement position.

Moreover, the united object in FIG. 7 further includes the current collecting members (the positive electrode current collecting member 50 and the negative electrode current collecting member 60); therefore, as the spacer 80 moves toward the bottom wall 12a along the side walls 12b and 12c of the case main body 12, the current collecting members also move toward the bottom wall 12a. Thus, as illustrated in FIG. 4, the second connection part 52 with the columnar shape of the positive electrode current collecting member 50 is inserted to the first concave part 30r of the positive electrode terminal 30 and at least a part of the positive electrode current collecting member 50 is disposed inside the first concave part 30r of the positive electrode terminal 30. In this embodiment, moreover, the tip end part of the second connection part 52 of the positive electrode current collecting member 50 is in contact with the bottom surface 30b of the first concave part 30r of the positive electrode terminal 30. Similarly, the second connection part 62 with the columnar shape of the negative electrode current collecting member 60 is inserted to the first concave part 40r of the negative electrode terminal 40 and at least a part of the negative electrode current collecting member 60 is disposed inside the first concave part 40r of the negative electrode terminal 40. In this embodiment, the current collecting member can be stably inserted to the first concave part of the terminal provided at the bottom wall 12a in this manner. That is to say, the spacer 80 according to this embodiment can also function as a positioning member that guides the current collecting member to a desired joining position.

In this embodiment, as illustrated in FIG. 6 and FIG. 7, this step is performed in such a way that the bottom wall 12a of the case main body 12 is in the inversion posture of facing upward in the vertical direction. In the case where the weight of the electrode body 20 is large, for example, this step may be performed in such a way that the side walls (the pair of long side walls 12b or the pair of short side walls 12c) are in a posture of existing up and down in the vertical direction and the short sides or the long sides of the bottom wall 12a extend in the horizontal direction.

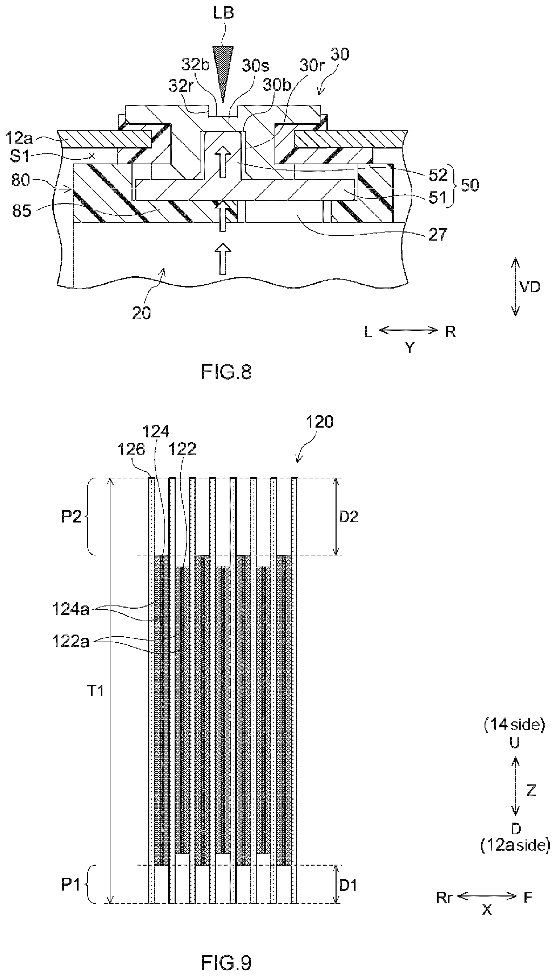

In (step 5) the welding step, after the inserting step, an energy beam is delivered from the first electrode terminal (the positive electrode terminal 30 or the negative electrode terminal 40) side, so that the part of the first current collecting member (the positive electrode current collecting member 50 or the negative electrode current collecting member 60) that is disposed inside the first concave part (the first concave part 30r or the first concave part 40r) is joined by welding to the first electrode terminal. FIG. 8 is an explanatory view of the welding step. Note that, in the illustration in FIG. 8, the vicinity of the positive electrode terminal 30, which is a main part, is partially enlarged. Moreover, the bottom wall 12a is in the inversion posture of facing upward in the vertical direction, similarly to FIG. 6.

In this embodiment, the spacer 80 is disposed between the bottom wall 12a and the electrode body 20 after the inserting step. As illustrated in FIG. 8, a surface of the first current collecting member (the positive electrode current collecting member 50) that is on the electrode body 20 side is supported by the support part 85 (specifically, the step part 85s) of the spacer 80 from below in the vertical direction. Therefore, when the electrode body 20 is pressurized from the opening 12h side to the bottom wall 12a side as indicated by arrows in FIG. 8 while the bottom wall 12a remains in the inversion posture of facing upward in the vertical direction, the first current collecting member (the positive electrode current collecting member 50) is pressed against the first electrode terminal (the positive electrode terminal 30) through the spacer 80. Accordingly, the positive electrode current collecting member 50 and the positive electrode terminal 30 can be brought into contact with each other more suitably and the positive electrode current collecting member 50 and the positive electrode terminal 30 can be joined together by welding in the suitable contact state. Note that it is more preferable to provide a gap between a surface of the first connection part 51 on the bottom wall 12a side (an upper surface in FIG. 8) and a part of the positive electrode terminal 30 that faces the first connection part 51 (a lower end part of the inner flange part 33 in FIG. 8) while a tip end of the second connection part 52 (an upper end in FIG. 8) is in contact with the positive electrode terminal 30. Thus, the tip end of the second connection part 52 gets in contact with the positive electrode terminal 30 more stably and certainly.

Note that an end surface of the electrode body 20 on the lower side in the vertical direction (an end surface on the side opposite to the side where the first current collecting member is disposed) may be pressurized directly or the pressurization may be performed through another member (for example, the electrode body holder 29, another spacer, the sealing plate 14, or the like).

In addition, in this embodiment, the inner surface of the bottom wall 12a and the spacer 80 are not in contact with each other and are close to each other in this step as illustrated in FIG. 8. That is to say, a small gap S1 is secured between the inner surface of the bottom wall 12a and a part of the spacer 80 that is the closest to the bottom wall 12a (a left end part in FIG. 8, near the short side wall 12c). Thus, the first current collecting member (the positive electrode current collecting member 50) is effectively pressed against the first electrode terminal (the positive electrode terminal 30) by the spacer 80.

While the first current collecting member (the positive electrode current collecting member 50) is pressed against the first electrode terminal (the positive electrode terminal 30), the part where both members are in contact is joined by welding. Specifically, the part of the positive electrode current collecting member 50 that is inserted to the first concave part 30r is joined by welding to the positive electrode terminal 30. In this embodiment, as illustrated in FIG. 8, the first electrode terminal (the positive electrode terminal 30) includes the second concave part 32r, and the bottom surface 30b of the second concave part 32r is irradiated with an energy beam (here, laser LB). Thus, the tip end part of the second connection part 52 of the positive electrode current collecting member 50 is joined by welding to the bottom surface 30b of the first concave part 30r of the positive electrode terminal 30. Irradiating the second concave part 32r with the energy beam makes it possible to join the positive electrode current collecting member 50 and the positive electrode terminal 30 more stably.

In addition, as described above, the diameter Φ3 of the second connection part 52 is larger than the diameter Φ2 of the second concave part 32r of the positive electrode terminal 30 (Φ2 < Φ3, see FIG. 4) in this embodiment. Thus, even if the position of the second connection part 52 is displaced a little in the XY plane when the energy beam is delivered into the second concave part 32r, the positive electrode current collecting member 50 and the positive electrode terminal 30 can be welded together stably.

Although the kind of the energy beam to be delivered is not limited in particular, laser is preferable. In some embodiments, it is preferable to perform penetration welding by delivering an energy beam such as laser from outside the case main body 12 (the outer surface side of the bottom wall 12a). Delivering the energy beam from outside the case main body 12 makes it possible to see the joining part with eyes; therefore, the first current collecting member and the first electrode terminal can be joined more stably. In this embodiment, as illustrated in FIG. 4, the welding joining part J (the part fused by the irradiation with the energy beam and solidified) is formed so as to reach the second connection part 52 of the positive electrode current collecting member 50 through the sectioning wall 30s of the positive electrode terminal 30.

In (step 6) the sealing step, the sealing plate 14 is engaged with the opening 12h of the case main body 12, so that the periphery of the opening 12h of the case main body 12 and the sealing plate 14 are joined. Thus, the joining part 10w is formed to seal the case 10. The joining method may be similar to the conventional method without particular limitations. In some embodiments, it is preferable to perform welding joining by delivering an energy beam such as laser to the engagement prat between the case main body 12 and the sealing plate 14 along the periphery of the opening 12h. In this manner, the electrical energy storage device 100 can be manufactured.

### [Application of electrical energy storage device]

The electrical energy storage device 100 can be used for various purposes, but can be suitably used in an application in which the load can be applied to the terminal (the positive electrode terminal 30 and/or the negative electrode terminal 40) during the use, for example, as a power source (driving power source) for a motor mounted on a moving body (typically, a vehicle such as a passenger car or a truck). The vehicle is not limited to a particular type, and may be, for example, a plug-in hybrid electric vehicle (PHEV), a hybrid electric vehicle (HEV), or a battery electric vehicle (BEV).

Although some embodiments of the present disclosure have been described above, these embodiments are just examples. The present disclosure can be implemented in various other modes. The present disclosure can be implemented based on the contents disclosed in this specification and the technical common sense in the relevant field. The techniques described in the scope of claims include those in which the embodiments exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

### (1) Current collector and electrode tab:

(1-1) For example, in the aforementioned embodiment, the positive electrode current collector 22c of the positive electrode 22 is a metal foil, specifically, an aluminum foil. In addition, the negative electrode current collector 24c of the negative electrode 24 is a metal foil, specifically, a copper foil. However, the present disclosure is not limited to these examples. In a modification, the current collector (the positive electrode current collector 22c and/or the negative electrode current collector 24c, preferably both) preferably has a structure including a core body with an insulating property (for example, resin layer) and a pair of metal layers formed on a pair of surfaces (both surfaces) of the core body. The total thickness of the current collector is preferably 20 µm or less and more preferably 10 µm or less, although there is no particular limitation.

The core body is preferably formed of resin such as polyethylene terephthalate (PET), nylon, polypropylene (PP), or polyethylene (PE). When the total thickness of the current collector is 100%, the thickness of the core body is preferably 50% or more. Thus, the weight of the electrode body 20 can be reduced and when, for example, the electrode tab (the positive electrode tab 22t and/or the negative electrode tab 24t) is disposed in a posture of being disposed below in the vertical direction during the use of the electrical energy storage device 100, the damage of the electrode tab and the electrode body 20 can be suppressed effectively. In addition, as the metal layer, it is preferable to use aluminum, an aluminum alloy, copper, a copper alloy, nickel, a nickel alloy, iron, an iron alloy, or the like.

(1-2) In the embodiment described above, for example, the electrode tab (the positive electrode tab 22t and/or the negative electrode tab 24t) is the region of the current collector (the positive electrode current collector 22c and/or the negative electrode current collector 24c) where the active material layer (the positive electrode active material layer 22a and/or the negative electrode active material layer 24a) is not formed. However, the present disclosure is not limited to this example. The electrode tab may be a member separated from the current collector. For example, in the case where the current collector has the structure of including the core body and the pair of metal layers as described above, a conductive member including a metal plate or a metal foil thicker than the metal layer may be attached to the metal layer part and the conductive member may be connected to the current collecting member (the positive electrode current collecting member 50 and/or the negative electrode current collecting member 60) as the electrode tab.

### (2) Electrode body:

The electrode body 20 is the wound electrode body in the aforementioned embodiment in FIG. 3, for example. However, the present disclosure is not limited to this example. In a modification, the electrode body 20 may be a multilayer electrode body in which a plurality of positive electrodes with a square shape (typically, a rectangular shape) and a plurality of negative electrodes with a square shape (typically, a rectangular shape) are stacked through a separator in an insulated state, for example. FIG. 9 is a longitudinal cross-sectional view schematically illustrating an electrode body 120 according to the modification. Note that FIG. 9 illustrates a state in (step 1B) the electrode body preparing step, that is, a state before the accommodation in the case 10.

As illustrated in FIG. 9, the electrode body 120 according to this modification includes a plurality of positive electrode plates 122, a plurality of negative electrode plates 124, and a plurality of separators 126. The positive electrode plates 122 and the negative electrode plates 124 are stacked along the short side direction X. The positive electrode plate 122 includes a positive electrode active material layer 122a, and the negative electrode plate 124 includes a negative electrode active material layer 124a. In the up-down direction Z, the negative electrode active material layer 124a is longer than the positive electrode active material layer 122a. The separator 126 is longer than the negative electrode active material layer 124a. The separator 126 protrudes over and under the negative electrode active material layer 124a. Note that in FIG. 9, a lower side corresponds to a side facing the bottom wall 12a of the case main body 12 at the time of the accommodation in the case 10, and an upper side corresponds to a side facing the sealing plate 14 at the time of the accommodation in the case 10.

The separator 126 includes a first projection margin part P1 projecting to a lower side (to the bottom wall 12a side) relative to a lower end of the negative electrode active material layer 124a, and a second projection margin part P2 projecting to an upper side (to the sealing plate 14 side) relative to an upper end of the negative electrode active material layer 124a. In this modification, a length D2 of the second projection margin part P2 in the up-down direction Z is preferably larger than a length D1 of the first projection margin part P1 in the up-down direction Z (that is, D1 < D2) when the separator 126 is in an extending state as illustrated in FIG. 9. A ratio (D2/D1) of the length D2 of the second projection margin part P2 to the length D1 of the first projection margin part P1 is preferably 1.2 or more and more preferably 1.5 or more. Note that, in a state where the electrode body 120 is accommodated in the case 10, each of the first projection margin part P1 and the second projection margin part P2 is in a folded state.

In addition, a length T1 of the electrode body 120 in the up-down direction Z when the separator 126 is in the extending state (see FIG. 9) is preferably larger than a length T2 of the inner size of the case 10 in the up-down direction Z (not illustrated) (that is, T2 < T1). Moreover, at a position apart from the terminal (the positive electrode terminal 30 and/or the negative electrode terminal 40) (for example, in a vicinity of the short side wall 12c), the length T1 of the electrode body 120 in the up-down direction Z is more preferably larger than a length T3 (not illustrated), which is obtained by subtracting the thickness of the spacer (the length in the up-down direction Z) from the length T2 described above (that is, T3 < T1). In addition, at a position apart from the terminal (the positive electrode terminal 30 and/or the negative electrode terminal 40) (for example, in a vicinity of the short side wall 12c), the length T1 of the electrode body 120 in the up-down direction Z is still more preferably larger than a length T4 (not illustrated), which is obtained by subtracting the thickness of the electrode body holder 29 (corresponding to two layers on the upper and lower sides) from the length T3 described above (that is, T4 < T1).

If the length T1 of the electrode body 120 satisfies any of the aforementioned relations, when the electrode body 120 is inserted into the case main body 12 in (step 4) the inserting step, the first projection margin part P1 and/or the second projection margin part P2 of the electrode body 120 is folded along the inner surface of the case main body 12. Thus, the electrode body 120 can be suitably pressed against the bottom wall 12a of the case main body 12 and in (step 5) the welding step, the first current collecting member can be brought into contact with the first electrode terminal more stably.

### (3) Current collecting member:

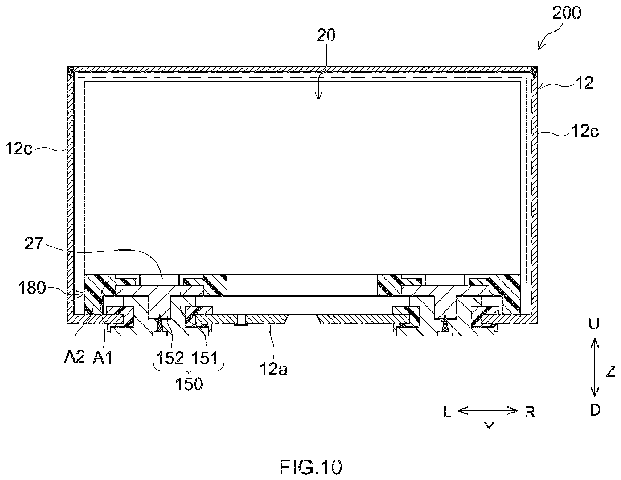

For example, in the aforementioned embodiment illustrated in FIG. 2 and FIG. 4, the second connection part 52 of the positive electrode current collecting member 50 is disposed at the position not overlapping with the positive electrode tab group 27 in the XY plan view (at the position displaced from the positive electrode tab group 27). However, the present disclosure is not limited to this example. FIG. 10 is a view corresponding to FIG. 2 according to a modification. As illustrated in FIG. 10, an electrical energy storage device 200 according to this modification includes a positive electrode current collecting member 150. The positive electrode current collecting member 150 includes a first connection part 151 and a second connection part 152. The positive electrode current collecting member 150 has a left-right symmetric shape in the long side direction Y. The second connection part 152 is disposed at a position overlapping with the positive electrode tab group 27 of the electrode body 20 in the XY plan view.

### (4) Spacer:

(4-1) For example, in the aforementioned embodiment in FIG. 5, the spacer 80 is one member. However, the present disclosure is not limited to this example. In the modification, the spacer 80 may be formed by a plurality of members. For example, the spacer may include a first part and a second part that are divided in the short side direction X. In this case, in (step 3) the assembling step, the spacer may be assembled to the current collecting member in such a way that the current collecting member (the positive electrode current collecting member 50 and/or the negative electrode current collecting member 60) is held between the first part and the second part of the spacer from both sides in the short side direction X.

(4-2) For example, in the aforementioned embodiment, the current collecting member (the positive electrode current collecting member 50 and/or the negative electrode current collecting member 60) is disposed in the support part 85 or 86 of the spacer 80, so that both members are integrated with (mechanically connected to) each other and configured to be able to move together to the bottom wall 12a side. However, the present disclosure is not limited to this example. In this specification, the term "integrate" can encompass all the following aspects, for example.
(4-2a) An aspect in which the spacer includes a penetration hole and a part of the current collecting member (for example, the second connection part with the columnar shape) is inserted to the penetration hole of the spacer.
(4-2b) An aspect in which a concave part is provided at an upper surface or a lower surface of the spacer and a part of the current collecting member (for example, a flange part like the first connection part described above) is engaged with the concave part of the spacer.
(4-2c) An aspect in which a claw part for fixing is provided at an upper surface or a lower surface of the spacer and the claw part catches a part of the current collecting member (for example, a flange part like the first connection part described above), so that the current collecting member is fixed.

(4-3) In addition, in the aforementioned embodiment, for example, the base part 89 of the spacer 80 has the flat plate shape. However, the present disclosure is not limited to this example. In the aforementioned modification illustrated in FIG. 10 according to (3), a spacer 180 includes a thin region A1 with relatively small thickness that is provided at a peripheral part of the terminal (the positive electrode terminal 30 and/or the negative electrode terminal 40) and a thick region A2 with relatively large thickness that is provided at a position apart from the terminal (here, in the vicinity of the pair of short side walls 12c). In the modification, when the bottom wall 12a of the case main body 12 is disposed on the lower side in the vertical direction at the manufacture or the use of the electrical energy storage device 100, the provision of the thick region A2 makes it possible to support the electrode body 20 by the bottom wall 12a through the thick region A2. Therefore, it is possible to suitably suppress the damage in the conductive path, for example the positive electrode tab group 27 and/or the negative electrode tab group 28, the joining part between the positive electrode tab group 27 and the positive electrode current collecting member 50 and/or the joining part between the negative electrode tab group 28 and the negative electrode current collecting member 60, or the like due to the weight of the electrode body 20.

(4-4) In the embodiment described above, for example, the spacer 80 functions as the positioning member for the current collecting member (the positive electrode current collecting member 50 and/or the negative electrode current collecting member 60). The method for positioning the current collecting member, however, is not limited to this method. The spacer 80 does not need to have the function as the positioning member. In the modification, the electrode body holder 29 may have a function as the positioning member for the current collecting member. In this case, the outer edge of the electrode body 20 wrapped with the electrode body holder 29 is preferably in contact with or close to the inner surface of the side wall of the case main body 12. The gap between the outer edge of the electrode body 20 wrapped with the electrode body holder 29 and the side wall of the case main body 12 (the difference between the inner size of the case main body 12 and the outer size of the electrode body holder 29) is preferably 1 mm or less, more preferably 0.8 mm or less, and still more preferably 0.5 mm or less. In addition, it is preferable that the electrode body holder 29 have the end part penetration hole at the surface where the current collecting member (the positive electrode current collecting member 50 and/or the negative electrode current collecting member 60) is disposed, and that the current collecting member (specifically, the second connection part to be inserted into the penetration hole of the terminal) penetrate the end part penetration hole.

### (5) Attachment of terminal:

For example, in the aforementioned embodiment, as illustrated in FIG. 6, the terminal (the positive electrode terminal 30 and/or the negative electrode terminal 40) is attached in advance to the bottom wall 12a of the case main body 12 in (step 1A) the case preparing step. However, the present disclosure is not limited to this example. The terminal can be attached to the bottom wall 12a in (step 5) the welding step, for example. In one example, first, in (step 4) the inserting step, the terminal extraction hole 18 and 19 parts of the bottom wall 12a are sandwiched between the terminal (the positive electrode terminal 30 and/or the negative electrode terminal 40) and the current collecting member (the positive electrode current collecting member 50 and/or the negative electrode current collecting member 60) from the inside and outside of the case main body 12, and at least a part of the current collecting member is disposed inside the first concave part 30r or 40r of the terminal. Then, in (step 5) the welding step, the terminal and the current collecting member are joined together by welding. Thus, the terminal can be attached to the bottom wall 12a (through the insulating member as necessary) at substantially the same time as the formation of the welding joining part J.

As described above, the following items are given as specific aspects of the art disclosed herein.
Item 1: The manufacturing method for the electrical energy storage device including the electrode body that includes the first electrode and the second electrode, the case that accommodates the electrode body, and the first electrode terminal that is electrically connected to the first electrode through the first current collecting member, in which the case includes the case main body with the bottomed tubular shape that includes the bottom wall, the side walls provided at the outer periphery of the bottom wall, and the opening facing the bottom wall, and the sealing plate that seals the opening of the case main body, the first electrode terminal is attached to the bottom wall of the case main body, and includes the first concave part on the inner side of the case main body, and at least a part of the first current collecting member is disposed inside the first concave part and the part disposed in the first concave part is joined by welding to the first electrode terminal, the manufacturing method including: the connecting step of electrically connecting the first current collecting member to the first electrode; the inserting step of inserting the electrode body into the case main body and disposing at least the part of the first current collecting member inside the first concave part of the first electrode terminal after the connecting step; and the welding step of delivering the energy beam from the side of the first electrode terminal after the inserting step, thereby joining by welding the part of the first current collecting member that is disposed inside the first concave part to the first electrode terminal.
Item 2: The manufacturing method according to Item 1, in which in the welding step, the spacer is disposed between the bottom wall and the electrode body, and the first current collecting member and the first electrode terminal are joined together while the electrode body is pressed to the side of the bottom wall so that the first current collecting member is pressed against the first electrode terminal through the spacer.
Item 3: The manufacturing method according to Item 2, in which in the welding step, the surface of the first current collecting member on the side of the electrode body is supported by the spacer.
Item 4: The manufacturing method according to any one of Items 1 to 3, further including, before the inserting step, the case preparing step of preparing the case main body in which the first electrode terminal is attached to the bottom wall.
Item 5: The manufacturing method according to Item 2 or 3, in which the spacer is integrated with the first current collecting member before the inserting step.
Item 6: The manufacturing method according to Item 2 or 3, in which a part of the spacer is disposed between the first current collecting member and the electrode body after the connecting step and before the inserting step.
Item 7: The manufacturing method according to any one of Items 1 to 6, in which the first electrode terminal further includes the second concave part on the outer surface at the position facing the first concave part, and in the welding step, the bottom surface of the second concave part is irradiated with the energy beam.
Item 8: The electrical energy storage device including: the electrode body that includes the first electrode and the second electrode; the case that accommodates the electrode body; and the first electrode terminal that is electrically connected to the first electrode through the first current collecting member, in which the case includes the case main body with the bottomed tubular shape that includes the bottom wall, the side walls provided at the outer periphery of the bottom wall, and the opening facing the bottom wall, and the sealing plate that seals the opening of the case main body, the first electrode terminal is attached to the bottom wall of the case main body, and includes the first concave part on the inner side of the case main body, and at least a part of the first current collecting member is disposed inside the first concave part and the part disposed in the first concave part is joined by welding to the first electrode terminal.
Item 9: The electrical energy storage device according to Item 8, further including the spacer that is disposed between the bottom wall and the electrode body, in which the spacer includes the part that is disposed between the first current collecting member and the electrode body. Item 10: The electrical energy storage device according to Item 9, in which the spacer is integrated with the first current collecting member.
Item 11: The electrical energy storage device according to any one of Items 8 to 10, in which the first electrode terminal further includes the second concave part on the outer surface at the position facing the first concave part, and the welding joining part between the first current collecting member and the first electrode terminal extends from the bottom surface of the second concave part to the bottom surface of the first concave part and further extends to the inside of the first current collecting member.

### [Reference Signs List]

10 Case
12 Case main body
12a Bottom wall
14 Sealing plate
20 Electrode body
22 Positive electrode (first electrode/second electrode)
24 Negative electrode (first electrode/second electrode)
27 Positive electrode tab group
30 Positive electrode terminal (first electrode terminal)
30r First concave part
40 Negative electrode terminal
50 Positive electrode current collecting member (first current collecting member)
60 Negative electrode current collecting member
80 Spacer
100 Electrical energy storage device

## Claims

1. A manufacturing method for an electrical energy storage device (100) including an electrode body (20) that includes a first electrode (22) and a second electrode (24), a case (10) that accommodates the electrode body (20), and a first electrode terminal (30) that is electrically connected to the first electrode (22) through a first current collecting member (50), wherein
the case (10) includes a case main body (12) with a bottomed tubular shape that includes a bottom wall (12a), side walls (12b, 12c) provided at an outer periphery of the bottom wall (12a), and an opening (12h) facing the bottom wall (12a), and a sealing plate (14) that seals the opening (12h) of the case main body (12),
the first electrode terminal (30) is attached to the bottom wall (12a) of the case main body (12), and includes a first concave part (30r) on an inner side of the case main body (12), and
at least a part (52) of the first current collecting member (50) is disposed inside the first concave part (30r) and the part disposed in the first concave part (30r) is joined by welding to the first electrode terminal (30),
the manufacturing method comprising:
a connecting step of electrically connecting the first current collecting member (50) to the first electrode (22);
an inserting step of inserting the electrode body (20) into the case main body (12) and disposing at least the part (52) of the first current collecting member (50) inside the first concave part (30r) of the first electrode terminal (30) after the connecting step; and
a welding step of delivering an energy beam (LB) from a side of the first electrode terminal (30) after the inserting step, thereby joining by welding the part of the first current collecting member (50) that is disposed inside the first concave part (30r) to the first electrode terminal (30).

2. The manufacturing method according to claim 1, wherein
in the welding step, a spacer (80) is disposed between the bottom wall (12a) and the electrode body (20), and
the first current collecting member (50) and the first electrode terminal (30) are joined together while the electrode body (20) is pressed to a side of the bottom wall (12a) so that the first current collecting member (50) is pressed against the first electrode terminal (30) through the spacer (80).

3. The manufacturing method according to claim 2, wherein in the welding step, a surface of the first current collecting member (50) on a side of the electrode body (20) is supported by the spacer (80).

4. The manufacturing method according to any one of claims 1 to 3, further comprising, before the inserting step, a case preparing step of preparing the case main body (12) in which the first electrode terminal (30) is attached to the bottom wall (12a).

5. The manufacturing method according to claim 2 or 3, wherein the spacer (80) is integrated with the first current collecting member (50) before the inserting step.

6. The manufacturing method according to claim 2 or 3, wherein a part of the spacer (80) is disposed between the first current collecting member (50) and the electrode body (20) after the connecting step and before the inserting step.

7. The manufacturing method according to any one of claims 1 to 6, wherein
the first electrode terminal (30) further includes a second concave part (32r) on an outer surface at a position facing the first concave part (30r), and
in the welding step, a bottom surface (32b) of the second concave part (32r) is irradiated with the energy beam (LB).

8. An electrical energy storage device (100) comprising:
an electrode body (20) that includes a first electrode (22) and a second electrode (24);
a case (10) that accommodates the electrode body (20); and
a first electrode terminal (30) that is electrically connected to the first electrode (22) through a first current collecting member (50), wherein
the case (10) includes a case main body (12) with a bottomed tubular shape that includes a bottom wall (12a), side walls (12b, 12c) provided at an outer periphery of the bottom wall (12a), and an opening (12h) facing the bottom wall (12a), and a sealing plate (14) that seals the opening (12h) of the case main body (12),
the first electrode terminal (30) is attached to the bottom wall (12a) of the case main body (12), and includes a first concave part (30r) on an inner side of the case main body (12), and
at least a part (52) of the first current collecting member (50) is disposed inside the first concave part (30r) and the part disposed in the first concave part (30r) is joined by welding to the first electrode terminal (30).

9. The electrical energy storage device (100) according to claim 8, further comprising a spacer (80) that is disposed between the bottom wall (12a) and the electrode body (20), wherein the spacer (80) includes a part that is disposed between the first current collecting member (50) and the electrode body (20).

10. The electrical energy storage device (100) according to claim 9, wherein the spacer (80) is integrated with the first current collecting member (50).

11. The electrical energy storage device (100) according to any one of claims 8 to 10, wherein
the first electrode terminal (30) further includes a second concave part (32r) on an outer surface at a position facing the first concave part (30r), and
a welding joining part (J) between the first current collecting member (50) and the first electrode terminal (30) extends from a bottom surface (32b) of the second concave part (32r) to a bottom surface (30b) of the first concave part (30r) and further extends to an inside of the first current collecting member (50).
